# EUROPÄISCHE PATENTANMELDUNG

(11) **EP 4 817 921 A1**
(43) Veröffentlichungstag der Anmeldung: **07.10.2026**
(21) Anmeldenummer: 26165258.0
(22) Anmeldetag: 17.03.2026
(51) Int. Cl.: B60K 25/00, F16D 1/10

(54) **NEBENANTRIEB ZUM ANTRIEB EINER ARBEITSMASCHINE FÜR EINEN NUTZKRAFTWAGEN, ADAPTERPLATTE UND VORRICHTUNG, BESTEHEND AUS DEM NEBENANTRIEB, DER ADAPTERPLATTE UND DER ARBEITSMASCHINE**

(30) Priorität: 04.04.2025 DE 102025113330
(71) Anmelder: Robert Bosch GmbH, 70442 Stuttgart (DE)
(72) Erfinder: Reimann, Mario, 71336 Waiblingen (DE); Hecht, Robert, 73249 Wernau (DE); Engbrecht, Jonathan, 75038 Flehingen (DE); Anspann, Stefan, 74223 Flein (DE); Mehnert, Benjamin Lukas, 71560 Sulzbach An Der Murr (DE); Weissinger, Daniel, 70825 Korntal-Muenchingen (DE); Wanner, Robert, 89079 Ulm (DE); Hasenhuendl, Hans-Juergen, 89081 Ulm (DE); Hieb, Robert, 89250 Senden (DE)

(57) **Zusammenfassung**

Die Erfindung ermöglicht es, Nebenantriebe (1) von Nutzkraftwagen mit Arbeitsmaschinen (2) in vorteilhafter Weise zu verbinden, obwohl die mechanischen Schnittstellen von Nebenantrieb (1) und Arbeitsmaschine (2) verschieden sind, zum Beispiel gemäß DIN ISO 7653 Dez 1986; SAE J744 OCT 2021 usw..

Hierzu wird neben einer Modifikation des Nebenantriebs (1) auch eine vorteilhafte Gestaltung einer Adapterplatte (3) vorgeschlagen.

## Beschreibung

### Stand der Technik

Aus dem Stand der Technik sind sowohl Nebenantriebe als auch Arbeitsmaschinen bekannt, die in Nutzkraftwagen miteinander verbunden werden, um Aufbauten der Nutzkraftwagen, die eine individuelle Funktion ausführen, anzutreiben. Es kann sich bei den Nutzkraftwagen beispielsweise um Betonmischer oder Betonpumpen, Müllfahrzeuge, Kipper, Krane oder ähnliches handeln. Die Nebenantriebe können beispielsweise elektrische Antriebe sein. Bei den Arbeitsmaschinen kann es sich beispielsweise um Hydraulikpumpen handeln.

Hinsichtlich der mechanischen Schnittstelle zwischen den Nebenantrieben und den Arbeitsmaschinen existieren unterschiedliche Normen, die Maße für Verbindungen (nachfolgend: Schnittstellendefinitionen) festlegen. Derartige Schnittstellendefinitionen sind beispielsweise in den Normen DIN ISO 7653 Dez 1986 und SAE J744 OCT 2021 angegeben.

Um Nebenantriebe, die gemäß einer bestimmten Schnittstellendefinition ausgebildet sind, mit Arbeitsmaschinen, die gemäß einer anderen, an sich mit der bestimmten Schnittstellendefinition nicht kompatiblen Schnittstellendefinition ausgebildet sind, zu koppeln, wurden bereits Montagestrukturen vorgeschlagen, die einerseits an den Nebenantrieben fixierbar sind und andererseits und unabhängig davon an den Arbeitsmaschinen fixierbar sind, also als Adapter wirken. Ein derartiger Adapter wird beispielsweise unter dem Link https://www.geje.nl/de/adapter-nebenantrieb-iso-pumpe-sae-c-z-14 kommerziell angeboten.

Beispielsweise schlägt das chinesische Gebrauchsmuster CN 203717330 U eine Montagstruktur für Hydraulikpumpen vor, die einen Flansch umfasst. Die Dicke und der Innen- und Außendurchmesser des Flansches werden durch die tatsächlichen Bedingungen bestimmt, der Innendurchmesser wird durch die Größe der Kupplung und der Außendurchmesser durch die Größe des Außenraums bestimmt. Auf einer Seite des Flansches befindet sich ein Vorsprung, und im Vorsprung befindet sich ein zylindrischer Hohlraum zur Aufnahme der Kupplung, wobei der Durchmesser des Hohlraums mit dem Innendurchmesser des Flansches übereinstimmt. Die Hydraulikpumpe ist an der Stirnseite des Vorsprungs montiert, und an der Stirnseite des Vorsprungs befinden sich Pumpenmontagebohrungen zur Montage der Hydraulikpumpe, wobei der Durchmesser der Pumpenmontagebohrungen kleiner als der Durchmesser des Hohlraums ist. Die Pumpenmontagebohrungen sind mit dem Hohlraum verbunden, und die Kupplung ist durch die Pumpenmontagebohrungen mit der Hydraulikpumpe verbunden. Das chinesische Gebrauchsmuster CN 203717330 U hebt hervor, dass die Montagestruktur eine einfache Struktur hat, die Dicke des Flansches reduziert ist und dass die Länge der für die Montage der Hydraulikpumpe an der Montagestruktur verwendeten Schrauben reduziert ist. Die Montagestruktur ist nachfolgend über separate Verschraubungen an einem Motor fixierbar.Offenbarung der Erfindung

Die vorliegende Erfindung geht auf den Wunsch der Erfinder zurück eine einfachere und kompaktere Lösung zur mechanischen Verbindung von an sich miteinander nicht kompatiblen Nebenantrieben und Arbeitsmaschinen zu schaffen.

Erfindungsgemäß ist ein Nebenantrieb zum Antrieb einer Arbeitsmaschine für einen Nutzkraftwagen vorgesehen, wobei der Nebenantrieb einen Motor aufweist und eine der Arbeitsmaschine zugewandte mechanische Schnittstelle aufweist, welche gemäß einer ersten Schnittstellendefinition, soweit sie die Seite des Nebenantriebs betrifft, ausgebildet ist.

Bei dem Motor kann es sich beispielsweise um einen Elektromotor handeln, beispielsweise um einen Elektromotor, der zusammen mit einer Leistungselektronik des Nebenantriebs, und ggf. mit einem Getriebe mit Über- bzw. Untersetzungsfunktion des Nebenantriebs, in einem Gehäuse des Nebenantriebs angeordnet ist. Dabei kann das Gehäuse des Nebenantriebs ein gegossenes Metallgehäuse sein, beispielsweise aus Aluminium. Der Nebenantrieb kann also eine Antriebsvorrichtung sein oder umfassen, die auch als E-Achse bezeichnet wird.

Die erste Schnittstellendefinition definiert eine der Arbeitsmaschine zugewandte mechanische Schnittstelle des Nebenantriebs und eine dazu kompatible dem Nebenantrieb zugewandte mechanische Schnittstelle der Arbeitsmaschine.

Im Einzelnen umfasst die erste Schnittstellendefinition:
- eine Definition einer ersten Geometrie eines Wellenendbereichs einer von dem Motor angetriebenen Ausgangswelle,
- eine Definition einer dazu kompatiblen ersten Geometrie eines Wellenendbereichs einer Eingangswelle der Arbeitsmaschine,
- eine Definition einer ersten Zentrierkontur eines Gehäuses des Nebenantriebs,
- eine Definition einer dazu kompatiblen ersten Zentrierkontur eines Gehäuses der Arbeitsmaschine,
- eine Definition einer ersten Bohrungs- und Verschraubungsgeometrie des Gehäuses des Nebenantriebs,
- eine Definition einer dazu kompatiblen ersten Bohrungs- und Verschraubungsgeometrie des Gehäuses der Arbeitsmaschine.

Die zweite und die weitere Schnittstellendefinition, von der weiter unten die Rede sein wird, enthalten ebenfalls Definitionen der genannten Maße, welche weiter unten sinngemäß ("zweite", "weitere") bezeichnet werden.

Die Geometrien der Wellenendbereiche der Ausgangswelle des Nebenantriebs und der Eingangswelle der Arbeitsmaschine sind beispielsweise zueinander kompatible Steckverzahnungen, die die Übertragung eines Drehmoments und einer Drehung von dem Motor zu der Arbeitsmaschine ermöglichen.

Die Zentrierkonturen des Gehäuses des Nebenantriebs und des Gehäuses der Arbeitsmaschine sind beispielsweise zueinander kompatible Ausnehmungen und Vorsprünge dieser Gehäuse, die nach einem axialen Einführen ineinander eine transversale Verschiebung der Gehäuse relativ zueinander verhindern. Es kann sich um zylindrische bzw. hohlzylindrische Zentrierkonturen im Sinne von geraden Kreiszylindern handeln, es sind aber auch andere Konturen denkbar, beispielsweise eckige Zentrierkonturen oder Zentrierkonturen, die nicht vollständig umlaufen, sondern nur entlang von Teilen eines Umlaufes physikalisch ausgeprägt sind.

Die Bohrungs- und Verschraubungsgeometrien des Gehäuses des Nebenantriebs und des Gehäuses der Arbeitsmaschine sind beispielsweise mit Hinblick auf ihre Lage, ihre Größe und mit Hinblick auf die Vorsehung als Durchgangsbohrung und/oder als Gewindebohrung, zueinander kompatible Bohrungen. Beispielsweise ist dabei eine Gewindebohrung des einen Gehäuses gegenüberliegend einer Durchgangsbohrung des anderen Gehäuses vorgesehen, sodass mittels einer Schraube, die durch die Durchgangsbohrung hindurchgesteckt ist und deren Gewinde in die Gewindebohrung eingreift, eine axiale Verspannung zwischen den Gehäusen herstellbar ist, die nach Anzug der Schraube eine axiale Verschiebung der Gehäuse relativ zueinander verhindert.

Dadurch, dass die der Arbeitsmaschine zugewandte mechanische Schnittstelle des Nebenantriebs zusätzlich die Bohrungen gemäß einer zweiten Bohrungs- und Verschraubungsgeometrie des Gehäuses des Nebenantriebs aufweist, die sich von der ersten Bohrungs- und Verschraubungsgeometrie des Gehäuses des Nebenantriebs unterscheidet und die gemäß einer zweiten Schnittstellendefinition ausgebildet ist, wird erreicht, dass mit dem Gehäuse des Nebenantriebs neben Arbeitsmaschinen, die gemäß der ersten Schnittstellendefinition ausgebildet sind, auch Arbeitsmaschinen, die gemäß der zweiten Schnittstellendefinition ausgebildet sind, grundsätzlich verschraubbar sind. Sofern die zweite Schnittstellendefinition arbeitsmaschinenseitig passende Definitionen des Wellenendbereichs und der Zentrierkontur vorsähe, wäre eine Fixierung der beiden Gehäuse aneinander sogar unmittelbar möglich.

Aber auch im Fall einer beliebigen Definition dieser Größen durch die zweite Schnittstellendefinition ist eine Fixierung des Gehäuses des Nebenantriebs mit dem Gehäuse der Arbeitsmaschine durch eine Anordnung einer erfindungsgemäßen Adapterplatte (siehe unten) zwischen den beiden Gehäusen sehr einfach und platzsparend möglich.

Die Erfindung ist nicht darauf beschränkt, dass die der Arbeitsmaschine zugewandte mechanische Schnittstelle des Nebenantriebs zusätzlich lediglich die Bohrungen gemäß einer zweiten Bohrungs- und Verschraubungsgeometrie des Gehäuses des Nebenantriebs aufweist, die sich von der ersten Bohrungs- und Verschraubungsgeometrie des Gehäuses des Nebenantriebs unterscheidet und die gemäß einer zweiten Schnittstellendefinition ausgebildet ist. Vielmehr kann die der Arbeitsmaschine zugewandte mechanische Schnittstelle des Nebenantriebs die Bohrungen einer (oder mehrerer) weiteren Bohrungs- und Verschraubungsgeometrie des Gehäuses des Nebenantriebs aufweisen, die sich von der ersten und zweiten Bohrungs- und Verschraubungsgeometrie des Gehäuses des Nebenantriebs unterscheidet (unterscheiden) und die gemäß einer entsprechenden Schnittstellendefinition (entsprechender Schnittstellendefinitionen) ausgebildet ist (sind).

Bei der ersten/zweiten/weiteren Schnittstellendefinition kann es sich zum Beispiel um die in der DIN ISO 7653 Dez 1986 angegebene Schnittstellendefinition handeln. Bei der ersten/zweiten/weiteren Schnittstellendefinition kann es sich zum Beispiel auch um in der SAE J744 OCT 2021 angegebene Schnittstellendefinition handeln, beispielsweise SAE B/2 Bolt; SAE B/4 Bolt; SAE C/2 Bolt; usw.

Die Bohrungen des Gehäuses des Nebenantriebs können als Gewindebohrungen ausgebildet sein und die Bohrungen des Gehäuses der Arbeitsmaschine können als Durchgangsbohrungen ausgebildet sein; alternativ können auch die Bohrungen des Gehäuses der Arbeitsmaschine als Durchgangsbohrungen ausgebildet sein und die Bohrungen des Gehäuses der Arbeitsmaschine als Gewindebohrungen ausgebildet sein.

Die oben bereits erwähnte erfindungsgemäße Adapterplatte wirkt mit dem erfindungsgemäßen Nebenantrieb zusammen, indem sie eine dem Nebenantrieb zugewandte Seite und eine von dem Nebenantrieb abgewandte Seite aufweist, wobei die dem Nebenantrieb zugewandte Seite der Adapterplatte eine Zentrierkontur eines Gehäuses der Arbeitsmaschine gemäß der ersten Schnittstellendefinition aufweist. Die dem Nebenantrieb zugewandte Zentrierkontur der Adapterplatte ist also kompatibel mit der Zentrierkontur des Nebenantriebs.

Es ist ferner erfindungsgemäß vorgesehen, dass die von dem Nebenantrieb abgewandte Seite der Adapterplatte eine Zentrierkontur eines Gehäuses eines Nebenantriebs gemäß der zweiten Schnittstellendefinition aufweist. Diese Zentrierkontur ist also geeignet, mit einer Zentrierkontur einer Arbeitsmaschine, die eine mechanische Schnittstelle aufweist, welche gemäß der zweiten Schnittstellendefinition ausgebildet ist, kompatibel zusammenzuarbeiten.

Ferner ist erfindungsgemäß vorgesehen, dass die Adapterplatte Durchgangsbohrungen entsprechend der zweiten Bohrungs- und Verschraubungsgeometrie des Gehäuses des Nebenantriebs aufweist. Damit wird bewirkt, dass eine Verschraubung einer Arbeitsmaschine, die eine mechanische Schnittstelle aufweist, welche gemäß der zweiten Schnittstellendefinition ausgebildet ist, mit einem Nebenantrieb, der zumindest zusätzlich zu anderen Bohrungen die Bohrungen gemäß der zweiten Bohrungs- und Verschraubungsgeometrie des Gehäuses des Nebenantriebs aufweist, ohne weiteres möglich ist. Dazu werden beispielsweise Schrauben durch die Durchgangsbohrungen der Adapterplatte lediglich hindurchgesteckt und verspannen dann das Gehäuse des Nebenantriebs unmittelbar mit dem Gehäuse der Arbeitsmaschine.

Vorteilhafterweise kann die Platte als einstückige Platte ausgebildet sein, also als Platte, die nicht aus Subkomponenten lösbar oder unlösbar zusammengesetzt ist.

Eine minimalistisch flache und damit Bauraum sparende Adapterplatte kann realisiert werden, wenn vorgesehen ist, dass die Zentrierkontur auf der dem Nebenantrieb zugewandten Seite der Adapterplatte mittels eines umlaufenden Absatzes in die Zentrierkontur auf der von dem Nebenantrieb abgewandten Seite der Adapterplatte übergeht. Bei kreisrunden Zentrierkontoren handelt es sich bei dem umlaufenden Absatz beispielsweise um einen kreisrunden Ringabsatz.

Zweckmäßigerweise kann vorgesehen sein, dass die Ausgangswelle des Nebenantriebs mit der Eingangswelle der Arbeitsmaschine über ein Kupplungsstück der Vorrichtung drehfest verbindbar oder verbunden ist, wobei das Kupplungsstück auf der zur Arbeitsmaschine weisenden Seite gemäß der ersten Geometrie eines Wellenendbereichs einer Eingangswelle der Arbeitsmaschine ausgebildet ist und auf der zur Arbeitsmaschine weisenden Seite gemäß der zweiten Geometrie ausgebildet ist. Über das Kupplungsstück kann dann ein Drehmoment der Ausgangswelle des Nebenantriebs sicher auf die Eingangswelle der Arbeitsmaschine übertragen werden.

Die Geometrie des Kupplungsstücks kann neben der ersten Schnittstellendefinition und der zweiten Schnittstellendefinition auch von der Geometrie, insbesondere von der Dicke, der Adapterplatte abhängen, sodass die Adapterplatte und das Kupplungsstück als einander zugeordnete Gegenstände aufgefasst werden können.

Nachfolgend werden beispielhafte Ausführungsformen der Erfindung unter Bezugnahme auf die Zeichnung erläutert. In der Zeichnung zeigt:
- Figur 1: verschiedene Schnittstellen von Arbeitsmaschinen,
- Figur 2: ein Ausführbeispiel eines erfindungsgemäßen Nebenantriebs,
- Figur 3: ein Ausführbeispiel einer erfindungsgemäßen Adapterplatte,
- Figur 4: ein Ausführbeispiel einer erfindungsgemäßen Vorrichtung, die aus einem Nebenantrieb, einer Adapterplatte und einer Arbeitsmaschine besteht,
- Figur 5: eine Detailansicht des Ausführbeispiels aus Figur 4.

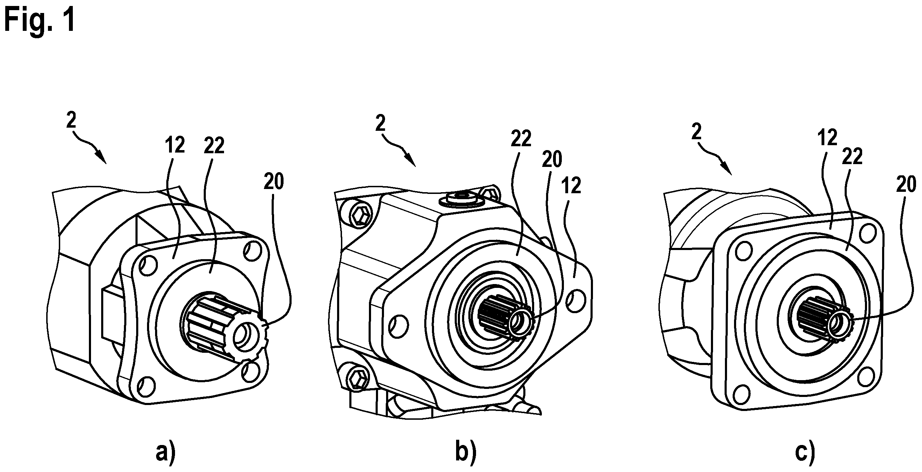

Figur 1 zeigt verschiedene Schnittstellen von Arbeitsmaschinen 2 zur Verbindung mit Nebenantrieben 1 von Nutzfahrzeugen. Im Teil a) ist der Standard gemäß DIN ISO 7653 Dez 1986 gezeigt, in denen Teilen b) und c) sind die Standards B/2 Bolts und B/4 Bolts gemäß der Norm SAE J744 OCT 2021 gezeigt.

Diese Schnittstellendefinitionen legen jeweils fest:
- eine Definition einer Geometrie eines Wellenendbereichs 20 einer Eingangswelle der Arbeitsmaschine 2,
- eine Definition einer Zentrierkontur 22 eines Gehäuses 12 der Arbeitsmaschine 2,
- eine Definition einer Bohrungs- und Verschraubungsgeometrie des Gehäuses 12 der Arbeitsmaschine 2. Die Bohrungen sind in den Teilfiguren mit α, β, γ gekennzeichnet.

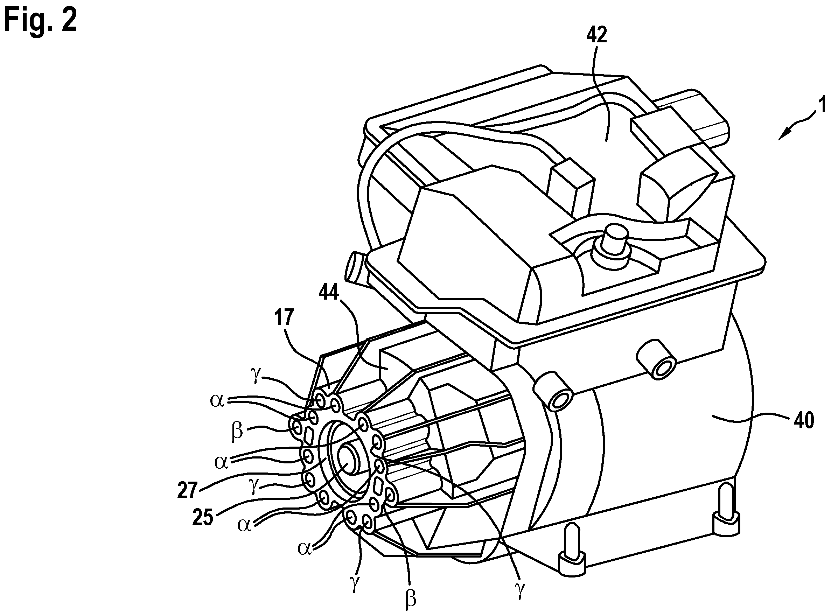

Ferner legen die Schnittstellendefinitionen auch dazu kompatible Gestaltungen der gegenüber liegenden Seite des Nebenantriebs 1 fest, siehe Figur 2, nämlich:
- eine Definition einer Geometrie eines Wellenendbereichs 25 einer Ausgangswelle des Nebenantriebs 1,
- eine Definition einer Zentrierkontur 27 eines Gehäuses 17 des Nebenantriebs 1,
- eine Definition einer Bohrungs- und Verschraubungsgeometrie des Gehäuses 17 des Nebenantriebs 1.

Der in der Figur 2 gezeigte Nebenantrieb 1 umfasst einen Elektromotor 40, eine mit ihm verbundene Leistungselektronik 42 und ein Getriebe 44 mit Übersetzungsfunktion, die zusammen in einem gegossenen Gehäuse 17 des Nebenantriebs 1 angeordnet sind. Der gezeigte Nebenantrieb 1 weist einen Wellenendbereich 25, eine Zentrierkontur 27 und Bohrungen gemäß dem Standard der DIN ISO 7653 Dez 1986 auf. Diese Bohrungen sind in der Figur 2 mit α gekennzeichnet. Er ist also ohne weiteres mit der im Teil a) der Figur 1 gezeigte Arbeitsmaschine 2 kompatibel und verbindbar.

Im Beispiel sind sogar 2 Sätze von jeweils 4 Bohrungen α gemäß dem Standard der DIN ISO 7653 Dez 1986 vorhanden, die um 45° zueinander verdreht sind. Entsprechend sind an dem gezeigten Nebenantrieb 1 Arbeitsmaschinen 2 in unterschiedlicher Orientierung montierbar.

Darüber hinaus umfasst der in der Figur 2 gezeigte Nebenantrieb 1 aber auch Bohrungen gemäß dem Standard B/2 Bolts gemäß der Norm SAE J744 OCT 2021, welche in der Figur 2 mit β gekennzeichnet sind, und Bohrungen gemäß dem Standard B/4 Bolts gemäß der Norm SAE J744 OCT 2021, welche in der Figur 2 mit γ gekennzeichnet sind.

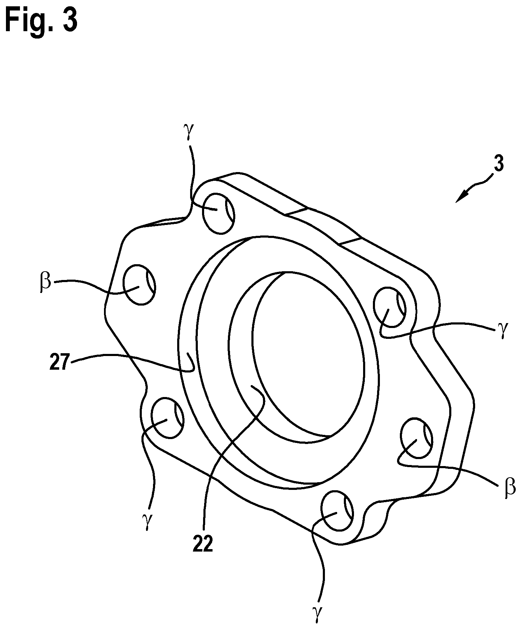

Figur 3 zeigt ein Ausführbeispiel einer erfindungsgemäßen Adapterplatte 3. Sie dient dazu, den in der Figur 2 gezeigten Nebenantrieb 1 mit den in den Teilen b) und c) der Figur 1 gezeigten Arbeitsmaschinen 2 zu verbinden und insofern die an sich vorhandene Inkompatibilität zwischen diesen Vorrichtungen zu überwinden.

Hierzu weist die Adapterplatte 3 eine dem Nebenantrieb 1 zugewandte Seite (in der Figur 3 hinten) und eine von dem Nebenantrieb 1 abgewandte Seite (in der Figur 3 vorne) auf. Die dem Nebenantrieb 1 zugewandte Seite der Adapterplatte 3 weist eine Zentrierkontur 22 auf, wie sie durch die in der Norm DIN ISO 7653 Dez 1986 angegebenen Schnittstellendefinition für das Gehäuse 12 einer Arbeitsmaschine 2 vorgesehen ist. Diese Zentrierkontur 22 ist also bündig und passgenau in die Zentrierkontur 27 des Gehäuses des in der Figur 2 gezeigten Nebenantriebs 1 einführbar.

Die Adapterplatte 3 weist ferner auf ihrer von dem Nebenantrieb 1 abgewandte Seite eine Zentrierkontur 27 eines Gehäuses 17 eines Nebenantriebs 1 gemäß der Schnittstellendefinition B/2 Bolt bzw. gemäß der mit Hinblick auf die Zentrierkontur 27 identischen Schnittstellendefinition B/4 Bolt gemäß der Norm SAE J744 OCT 2021 auf. In diese Zentrierkontur 27 sind die in den Teilen b) und c) der Figur 1 gezeigten arbeitsmaschinenseitigen Zentrierkonturen 22 ohne weiters einführbar.

Die Adapterplatte 3 weist Durchgangsbohrungen entsprechend der Bohrungs- und Verschraubungsgeometrien der beiden Schnittstellendefinition B/2 Bolt und B/4 Bolt gemäß der Norm SAE J744 OCT 2021 auf. Die Durchgangsbohrungen sind in der Figur 3 mit β für B/2 Bolt und mit γ für B/4 Bolt gekennzeichnet. Vor den jeweils betreffenden Durchgangsbohrungen β, γ kommen passgenau die Bohrungen β, γ der in den Teilen b) und c) der Figur 1 gezeigten Arbeitsmaschinen 2 zu liegen, wenn diese Arbeitsmaschinen 2 mit ihrer Zentrierkontur 22 voran in die gezeigte Adapterplatte 3 eingeführt werden; bzw. wenn die Adapterplatte 3 auf die betreffende Arbeitsmaschine 2 aufgeschoben wird.

Die Zentrierkontur 22 auf der dem Nebenantrieb 1 zugewandten Seite der Adapterplatte 3 geht im Beispiel mittels eines umlaufenden Absatzes 52, der im Beispiel die Form eines Ringabsatzes hat, in die Zentrierkontur 27 auf der von dem Nebenantrieb 1 abgewandten Seite der Adapterplatte 3 über. Die Adapterplatte 3 kann daher sehr flach und Bauraum sparend ausgeführt sein.

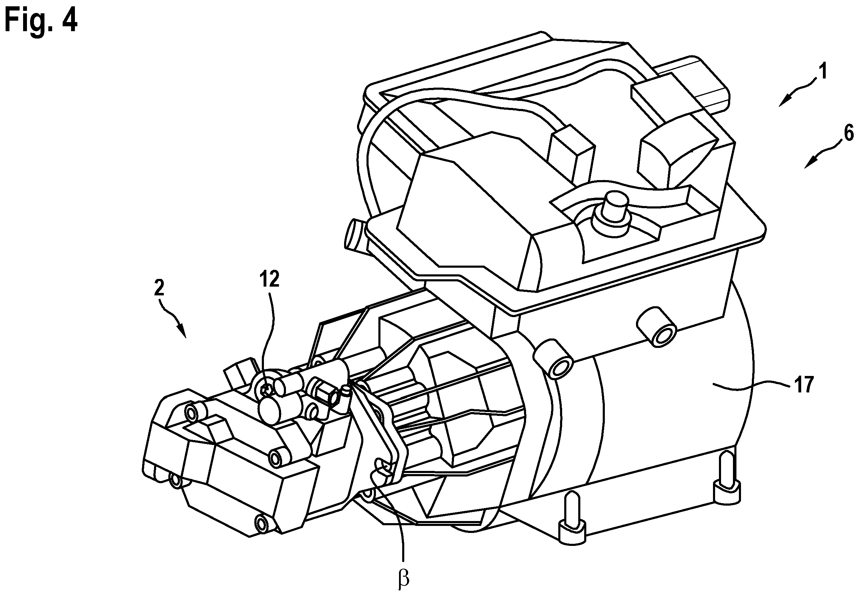

Figur 4 zeigt ein Ausführbeispiel einer erfindungsgemäßen Vorrichtung 6, die aus dem Nebenantrieb 1 der Figur 2, der Adapterplatte 3 gemäß Figur 3 und der Arbeitsmaschine 2 gemäß dem Teil b) der Figur 1 besteht. Sie sind bereits bestimmungsgemäß vormontiert und nun ohne Weiteres fixierbar, indem (nicht gezeichnete) Schrauben durch die Bohrungen β der Arbeitsmaschine 2 und durch die Durchgangsbohrungen β der Adapterplatte 3 hindurchgesteckt in Gewinde der betreffenden Bohrungen β des Gehäuses 17 des Nebenantriebs 1 eingreifen und somit das Gehäuse 12 der Arbeitsmaschine 2 mit dem Gehäuse 17 des Nebenantriebs 1 unmittelbar verspannen.

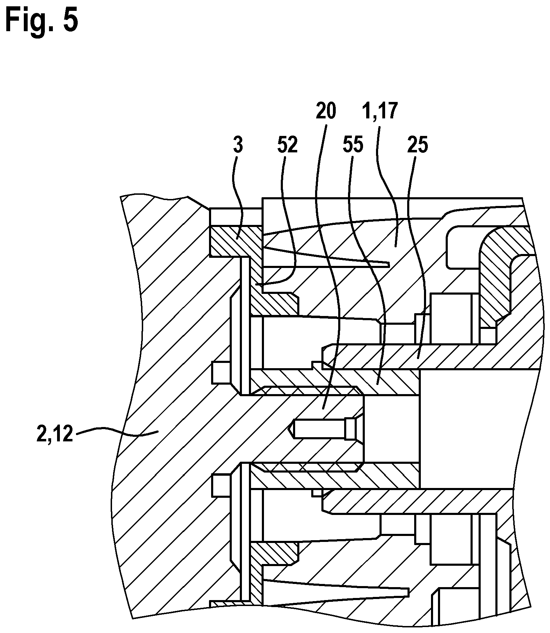

Figur 5 zeigt ausschnittsweise einen Schnitt entlang der Achsen durch die Wellen im Bereich der Adapterplatte 3.

Wie ersichtlich ist ein Kupplungsstück 55 vorgesehen, dass auf der zum Nebenantrieb 1 weisenden Seite (rechts) gemäß der Maße für den Wellenendbereichs 20 einer Eingangswelle der Arbeitsmaschine 2 gemäß der Norm DIN ISO 7653 Dez 1986 ausgebildet ist, während das Kupplungsstück 55 auf der zur Arbeitsmaschine 2 weisenden Seite gemäß der Maße für einen Wellenendbereich 25 einer Ausgangswelle eines Nebenantriebs 1 gemäß der Schnittstellendefinition B/2Bolt der Norm SAE J744 OCT 2021 ausgebildet ist. Die durch die Adapterplatte 3 eingefügte axiale Verschiebung wird durch die axiale Gestaltung bzw. die Länge des Kupplungsstücks 55 ebenfalls passend ausgeglichen.

## Patentansprüche

1. Nebenantrieb (1) zum Antrieb einer Arbeitsmaschine (2) für einen Nutzkraftwagen, wobei der Nebenantrieb (1) einen Motor (40) aufweist und eine der Arbeitsmaschine (2) zugewandte mechanische Schnittstelle aufweist, welche gemäß einer ersten Schnittstellendefinition, soweit sie die Seite des Nebenantriebs (1) betrifft, ausgebildet ist,
wobei die erste Schnittstellendefinition eine Definition einer ersten Geometrie eines Wellenendbereichs (25) einer von dem Motor (40) angetriebenen Ausgangswelle umfasst und eine Definition einer dazu kompatiblen ersten Geometrie eines Wellenendbereichs (20) einer Eingangswelle der Arbeitsmaschine (2) umfasst und eine Definition einer ersten Zentrierkontur (27) eines Gehäuses (17) des Nebenantriebs (1) umfasst und eine Definition einer dazu kompatiblen ersten Zentrierkontur (22) eines Gehäuses (12) der Arbeitsmaschine (2) umfasst und eine Definition einer ersten Bohrungs- und Verschraubungsgeometrie des Gehäuses (17) des Nebenantriebs (1) umfasst und eine Definition einer dazu kompatiblen ersten Bohrungs- und Verschraubungsgeometrie des Gehäuses (12) der Arbeitsmaschine (2) umfasst, wobei die der Arbeitsmaschine (2) zugewandte mechanische Schnittstelle des Nebenantriebs (1) zusätzlich die Bohrungen (α, β, y) gemäß einer zweiten Bohrungs- und Verschraubungsgeometrie des Gehäuses (17) des Nebenantriebs (1) aufweist, die sich von der ersten Bohrungs- und Verschraubungsgeometrie des Gehäuses (17) des Nebenantriebs (1) unterscheidet und die gemäß einer zweiten Schnittstellendefinition ausgebildet ist, wobei die zweite Schnittstellendefinition des Weiteren eine Definition einer zweiten Geometrie eines Wellenendbereichs (25) einer von dem Motor angetriebenen Ausgangswelle umfasst und eine Definition einer dazu kompatiblen zweiten Geometrie des Wellenendbereichs (20) der Eingangswelle der Arbeitsmaschine (2) umfasst und die Definition einer zweiten Zentrierkontur (27) des Gehäuses (17) des Nebenantriebs (1) umfasst, welche sich von der ersten Zentrierkontur (27) unterscheidet, und eine Definition einer dazu kompatiblen zweiten Zentrierkontur (22) des Gehäuses (12) der Arbeitsmaschine (2) umfasst und die Definition einer zweiten Bohrungs- und Verschraubungsgeometrie des Gehäuses (12) der Arbeitsmaschine (2) umfasst, die zu der zweiten Bohrungs- und Verschraubungsgeometrie des Gehäuses (17) des Nebenantriebs (1) kompatibel ist.

2. Nebenantrieb (1) nach Anspruch 1, **dadurch gekennzeichnet, dass** die mechanische Schnittstelle zusätzlich die Bohrungen (α, β, y) gemäß einer weiteren Bohrungs- und Verschraubungsgeometrie des Gehäuses (17) des Nebenantriebs (1) aufweist, die sich von der ersten Bohrungs- und Verschraubungsgeometrie des Gehäuses (17) des Nebenantriebs (1) und von der zweiten Bohrungs- und Verschraubungsgeometrie des Gehäuses (17) des Nebenantriebs (1) unterscheidet, und die gemäß der Definition von einer weiteren Bohrungs- und Verschraubungsgeometrie des Gehäuses (17) des Nebenantriebs (1) ausgebildet ist, die von einer weiteren Schnittstellendefinition umfasst ist, wobei die weitere Schnittstellendefinition des Weiteren eine Definition einer weiteren Geometrie eines Wellenendbereichs (25) einer von dem Motor (40) angetriebenen Ausgangswelle umfasst und eine Definition einer dazu kompatiblen weiteren Geometrie des Wellenendbereichs (20) der Eingangswelle der Arbeitsmaschine (2) umfasst und die Definition einer weiteren Zentrierkontur (27) des Gehäuses (17) des Nebenantriebs (1) umfasst, welche sich von der Definition der ersten Zentrierkontur (27) unterscheidet, und eine Definition einer dazu kompatiblen weiteren Zentrierkontur (22) des Gehäuses (12) der Arbeitsmaschine (2) umfasst und die Definition einer weiteren Bohrungs- und Verschraubungsgeometrie des Gehäuses (12) des Arbeitsmaschine (2) umfasst, die zu der weiteren Bohrungs- und Verschraubungsgeometrie des Gehäuses (17) des Nebenantriebs (1) kompatibel ist.

3. Nebenantrieb (1) nach Anspruch 1 oder 2, wobei die erste Schnittstellendefinition und die zweite Schnittstellendefinition, und gegebenenfalls die weitere Schnittstellendefinition, jeweils gegeben sind durch eine der in den folgenden Normen angegebenen Schnittstellendefinitionen: DIN ISO 7653 Dez 1986; SAE J744 OCT 2021.

4. Nebenantrieb (1) nach einem der Ansprüche 1, 2 oder 3, **dadurch gekennzeichnet, dass** die Bohrungen (α, β, y) des Gehäuses (17) des Nebenantriebs (1) Gewindebohrungen sind.

5. Nebenantrieb (1) nach einem der Ansprüche 1 bis 4, **dadurch gekennzeichnet, dass** der Motor (40) ein Elektromotor ist.

6. Nebenantrieb (1) nach einem der Ansprüche 1 bis 5, **dadurch gekennzeichnet, dass** der Elektromotor zusammen mit einer Leistungselektronik (42) des Nebenantriebs (1), und ggf. mit einem Getriebe (44) des Nebenantriebs (1), in dem Gehäuse (17) des Nebenantriebs (1) angeordnet ist.

7. Nebenantrieb 1 nach Anspruch 6, **dadurch gekennzeichnet, dass** das Gehäuse (17) des Nebenantriebs (1) ein gegossenes Metallgehäuse ist, beispielsweise aus Aluminium.

8. Adapterplatte (3) zum Zusammenwirken mit einem Nebenantrieb (1) nach einem der Ansprüche 1 bis 7, **dadurch gekennzeichnet, dass** die Adapterplatte (3) eine dem Nebenantrieb (1) zugewandte Seite und eine von dem Nebenantrieb (1) abgewandte Seite aufweist, wobei die dem Nebenantrieb (1) zugewandte Seite der Adapterplatte (3) eine Zentrierkontur (22) eines Gehäuses (12) der Arbeitsmaschine (2) gemäß der ersten Schnittstellendefinition aufweist und wobei die von dem Nebenantrieb (1) abgewandte Seite der Adapterplatte (3) eine Zentrierkontur (27) eines Gehäuses (17) eines Nebenantriebs (1) gemäß der zweiten Schnittstellendefinition aufweist und wobei die Adapterplatte (3) Durchgangsbohrungen (α, β, y) entsprechend der zweiten Bohrungs- und Verschraubungsgeometrie des Gehäuses (17) des Nebenantriebs 1 aufweist.

9. Adapterplatte (3) nach Anspruch 8, **dadurch gekennzeichnet, dass** die Adapterplatte (3) als einstückige Platte ausgebildet ist.

10. Adapterplatte (3) nach Anspruch 9, **dadurch gekennzeichnet, dass** die Zentrierkontur (22) auf der dem Nebenantrieb (1) zugewandten Seite der Adapterplatte (3) mittels eines umlaufenden Absatzes (52) in die Zentrierkontur (27) auf der von dem Nebenantrieb (1) abgewandten Seite der Adapterplatte (3) übergeht.

11. Vorrichtung (6) bestehend aus einer Adapterplatte (3) nach einem der Ansprüche 8 bis 10 und einem Nebenantrieb (1) nach dem entsprechenden der Ansprüche 1 bis 7 und einer Arbeitsmaschine (2), die eine mechanische Schnittstelle aufweist, welche gemäß der zweiten Schnittstellendefinition, soweit sie die Seite der Arbeitsmaschine (2) betrifft, ausgebildet ist, wobei die Adapterplatte (3) mit ihrer dem Nebenantrieb (1) zugewandten Seite zum Nebenantrieb (1) weisend und mit ihrer vom Nebenantrieb (1) abgewandten Seite zur Arbeitsmaschine (2) weisend zwischen dem Nebenantrieb (1) und der Arbeitsmaschine (2) fixiert oder fixierbar ist.

12. Vorrichtung (6) nach Anspruch 11, **dadurch gekennzeichnet, dass** die Adapterplatte (3) mit ihrer dem Nebenantrieb (1) zugewandten Seite am Gehäuse (17) des Nebenantriebs (1) plan anliegend und mit ihrer vom Nebenantrieb (1) abgewandten Seite am Gehäuse (12) der Arbeitsmaschine (2) plan anliegend mittels durch die Durchgangsbohrungen (α, β, y) hindurchgesteckte Schrauben fixiert oder fixierbar ist.

13. Vorrichtung (6) nach Anspruch 12, **dadurch gekennzeichnet, dass** jede der durch die Durchgangsbohrungen (α, β, y) hindurchgesteckten Schrauben das Gehäuse (17) des Nebenantriebs (1) mit dem Gehäuse (12) der Arbeitsmaschine (2) unmittelbar verspannt.

14. Vorrichtung (6) nach einem der Ansprüche 11 bis 13, **dadurch gekennzeichnet, dass** die Ausgangswelle des Nebenantriebs (1) mit der Eingangswelle der Arbeitsmaschine (2) über ein Kupplungsstück (55) der Vorrichtung (6) drehfest verbindbar oder verbunden ist, wobei das Kupplungsstück (55) auf der zum Nebenantrieb 1 weisenden Seite gemäß der ersten Geometrie eines Wellenendbereichs (20) einer Eingangswelle der Arbeitsmaschine (22) ausgebildet ist und auf der zur Arbeitsmaschine (2) weisenden Seite gemäß der zweiten Geometrie eines Wellenendbereichs (25) einer von dem Motor (40) angetriebenen Ausgangswelle ausgebildet ist.

15. Vorrichtung (6) nach einem der Ansprüche 11 bis 14, **dadurch gekennzeichnet, dass** der Verbund aus der vom Motor (40) angetriebenen Ausgangswelle, dem Kuppelstück (55) und der Eingangswelle der Arbeitsmaschine (2) durch eine zentrale Durchgangsöffnung in der Adapterplatte (3) hindurchführt oder hindurchführbar ist.

16. Vorrichtung (6) nach einem der Ansprüche 11 bis 15, **dadurch gekennzeichnet, dass** die Arbeitsmaschine (2) eine über ihre Eingangswelle antreibbare Hydraulikpumpe ist.
